# EUROPEAN PATENT APPLICATION

(11) **EP 4 265 709 A1**
(43) Date of publication of application: **25.10.2023**
(21) Application number: 21906058.9
(22) Date of filing: 23.08.2021
(51) Int. Cl.: C12G 3/00, C12G 3/04

(54) **CITRUS-FLAVORED ALCOHOLIC BEVERAGE**

(30) Priority: 16.12.2020 JP 2020208151
(71) Applicant: Asahi Group Holdings, Ltd., Tokyo 130-8602 (JP); Asahi Breweries, Ltd., Tokyo 130-8602 (JP)
(72) Inventor: SASAKI, Mayu, Moriya-shi, Ibaraki 302-0106 (JP)
(74) Representative: J A Kemp LLP
(86) International application number: PCT/JP2021/030763
(87) International publication number: WO 2022/130693

(57) **Abstract**

[Problem] To provide a novel technique capable of improving the flavor (deliciousness) of a citrus-flavored alcoholic beverage containing thymol.

[Solution] A citrus-flavored alcoholic beverage containing thymol such that the thymol content is 1.0 ppb or higher, and cineol such that the cineol content is 50-10,000 ppb (inclusive)

## Description

### Technical Field

The present invention relates to a citrus-flavored alcoholic beverage.

### Background Art

Alcoholic beverages sold at the beverage market include alcoholic beverages having flavor of citrus fruits (also referred to as "citrus-flavored alcoholic beverages" hereinafter).

In the production process for beverages having citrus flavor, such as citrus-flavored alcoholic beverages, addition of fruit juice or an extract derived from citrus is carried out in order to impart a flavor characteristic of citrus, or addition of an aroma component capable of characterizing or strengthening a flavor of citrus as an aroma essence or the like is carried out (e.g., Patent Literatures 1 to 3).

### Citation List

### Patent Literature

Patent Literature 1: JP-A-2019-37171
Patent Literature 2: JP-A-2016-36319
Patent Literature 3: JP-A-2017-225404

### Summary of Invention

### Technical Problem

It is an object of the present invention to provide a novel technique capable of improving a flavor (taste) of a citrus-flavored alcoholic beverage containing thymol.

### Solution to Problem

In the production of the aforementioned citrus-flavored alcoholic beverage, the present inventor has come up with incorporation of thymol in the beverage. Thymol is an aroma component contained in a large amount in Japanese citrus fruits, such as yuzu (*Citrus junos*), sudachi (*Citrus sudachi*) and kabosu (C*itrus sphaerocarpa*), herbs, such as thyme and oregano, etc., and by incorporating thymol in a citrus-flavored beverage, characteristic citrus flavor can be imparted.

However, the present inventor has realized that when thymol is incorporated in a citrus-flavored beverage containing an alcohol, the flavor of the beverage decreases, and the palatability sometimes decreases.

As a result of earnest studies, the present inventor has found that the flavor of a citrus-flavored alcoholic beverage can be improved by incorporating a specific amount of cineole in the beverage together with thymol, and has completed the present invention.

The subject matter of the present invention is as follows.
[1] A citrus-flavored alcoholic beverage comprising
   thymol at its content of 1.0 ppb or more, and
   cineole at its content of 50 ppb or more and 10000 ppb or less.
[2] The citrus-flavored alcoholic beverage according to [1], comprising citrus juice.
[3] The citrus-flavored alcoholic beverage according to [1] or [2], wherein a fruit juice content of the citrus juice is 3% or less.
[4] The citrus-flavored alcoholic beverage according to any one of [1] to [3], comprising fruit juice of a flavorful acid citrus fruit.
[5] The citrus-flavored alcoholic beverage according to any one of [1] to [4], comprising lemon juice.
[6] The citrus-flavored alcoholic beverage according to any one of [1] to [5], wherein a ratio of a cineole content (B) to a thymol content (A), (B)/(A), is 1.0 or more and 200 or less.
[7] The citrus-flavored alcoholic beverage according to any one of [1] to [6], having an alcohol content of 1 v/v% or more and 9 v/v% or less.
[8] The citrus-flavored alcoholic beverage according to any one of [1] to [7], being a container-packed beverage.
[9] The citrus-flavored alcoholic beverage according to any one of [1] to [8], having an acidity, in terms of citric acid, of 0.20 mg/100 ml or more.
[10] The citrus-flavored alcoholic beverage according to any one of [1] to [9], comprising carbonic acid gas and having a carbonic acid gas pressure of 1.5 to 3.5 gas volume.
[11] A method for producing a citrus-flavored alcoholic beverage, comprising
   incorporating thymol at its content of 1.0 ppb or more, and
   incorporating cineole at its content of 50 ppb or more and 10000 ppb or less.
[12] A method for improving a flavor of a citrus-flavored alcoholic beverage containing 1.0 ppb or more of thymol, comprising
   incorporating cineole in the citrus-flavored alcoholic beverage at a cineole content of 50 ppb or more and 10000 ppb or less.

### Advantageous Effect of Invention

According to the present invention, a novel technique capable of improving a flavor (taste) of a citrus-flavored alcoholic beverage containing thymol can be provided.

### Description of Embodiment

Hereinafter, one embodiment of the present invention will be described.

The present embodiment relates to a citrus-flavored alcoholic beverage, and the citrus-flavored alcoholic beverage comprises thymol at its content of 1.0 ppb or more and cineole at its content of 50 ppb or more and 10000 ppb or less.

In the present specification, the alcoholic beverage refers to a beverage containing an alcohol such as ethanol. In the citrus-flavored alcoholic beverage of the present embodiment, the alcohol content is not particularly limited and can be appropriately set by a person skilled in the art, but in order to leave a clean aftertaste, the alcohol content is preferably 1 v/v% or more and 9 v/v% or less.

The alcoholic beverage is produced by, for example, blending a liquor (base liquor) that becomes a source of an alcohol with water. The base liquor is not particularly limited, but it is, for example, a distilled liquor. Examples of the distilled liquors include gin, whisky, vodka, shochu and a material alcohol, and for example, the citrus-flavored alcoholic beverage of the present embodiment can be made up in such a manner that one or two or more of them are contained in the beverage.

Alternatively, the citrus-flavored alcoholic beverage refers to an alcoholic beverage having a taste and an aroma that can be associated with citrus fruits when the beverage is drunken. Examples of the citrus fruits include flavorful acid citrus fruits, such as orange, grapefruit, lemon, lime, flat lemon (*Citrus depressa*), sour orange (*Citrus aurantium*), yuzu (*Citrus junos*), kabosu (*Citrus sphaerocarpa*), sudachi (*Citrus sudachi*), citron and Buddha's hand citron (*Citrus medica var. sarcodactylus*); miscellaneous citrus fruits, such as bitter summer orange, hassaku orange (*Citrus hassaku*), hyuganatsu (*Citrus tamurana*), oroblanco and sumo mandarin; tangors, such as iyokan (*Citrus iyo*) and tankan mandarin; tangelos, such as seminole tangelo; pomelo (*Citrus maxima*); mandarin; and kumquat.

The citrus-flavored alcoholic beverage of the present embodiment contains thymol and cineole, as previously described.

Thymol (2-isopropyl-5-methylphenol) is a compound represented by C₁₀H₁₄O. In the citrus-flavored alcoholic beverage of the present embodiment, thymol is contained in an amount of 1.0 ppb or more. The upper limit of the thymol content is not particularly limited, but from the viewpoint of further improvement in taste required for the citrus-flavored alcoholic beverage, the content is preferably 500 ppb or less, and more preferably 200 ppb or less.

Cineole (1,8-cineole, 1,3,3-trimethyl-2-oxabicyclo[2.2.2]octane) is a compound represented by C₁₀H₁₈O. In the citrus-flavored alcoholic beverage of the present embodiment, the cineole is 50 ppb or more and 10000 ppb or less. Since the flavor can be more improved, the cineole content is preferably 100 ppb or more and 5000 ppb or less, and more preferably 500 ppb or more and 5000 ppb or less.

In the citrus-flavored alcoholic beverage of the present embodiment, a ratio of the cineole content (B) to the thymol content (A), (B)/(A), is preferably 1.0 or more and 200 or less, more preferably 2.0 or more and 100 or less, and still more preferably 10 or more and 100 or less, because the flavor can be more improved.

Regarding the citrus-flavored alcoholic beverage of the present embodiment, the method for adjusting the contents of thymol and cineole is not particularly limited, and the adjustment can be appropriately carried out by a person skilled in the art.

The contents of thymol and cineole can be not only calculated from the raw material composition but also obtained according to a known method using a gas chromatograph mass spectrometer (GC/MS). For example, regarding thymol, its content in a beverage can be obtained based on the method described in JP-A-2016-135110, and regarding cineole also, its content in a beverage can be obtained based on the method described in FLAVOUR AND FRAGRANCE JOURNAL 2002; 17: 169-174.

In addition to the thymol and the cineole, other components can be contained in the citrus-flavored alcoholic beverage of the present embodiment, when needed, as long as the objection of the present invention can be solved. Examples of the other components include not only water and an alcohol but also another component that imparts a flavor of a citrus fruit, an acidulant, an aroma essence, a vitamin, a colorant, an antioxidant, an emulsifier, a preservative, a sweetener, salt, a seasoning, extracts, a pH adjuster (e.g., citric acid, sodium citrate), a quality stabilizer, and a thickener.

The another component that imparts a flavor of a citrus fruit is, for example, fruit juice of a citrus fruit (citrus juice), and the citrus-flavored alcoholic beverage of the present embodiment can be a citrus-flavored alcoholic beverage containing citrus juice, as one preferred embodiment.

Here, fruit juice refers to a liquid component obtained by crushing a fruit, squeezing or straining the crushed fruit, and if necessary, removing the skin, seeds, etc., and a concentrate of the liquid component and a diluted reduction product thereof fall into the concept. The fruit juice that can be contained in the alcoholic beverage is, for example, at least one or more fruit juices selected from the aforementioned citrus fruits.

When citrus juice is contained, fruit juice of flavorful acid citrus fruits (generic name of citrus fruits which are not usually eaten raw because they have stronger acidity and aroma than other citrus fruits but aroma and acidity derived from whose fruit juice, etc. are utilized, among citrus fruits; for example, one or two or more selected from the group consisting of lemon, lime, flat lemon (*Citrus depressa*), sour orange (*Citrus aurantium*), yuzu (*Citrus junos*), kabosu (*Citrus sphaerocarpa*), sudachi (*Citrus sudachi*), citron and Buddha's hand citron (*Citrus medica var. sarcodactylus*)) is preferably contained, and lemon juice is more preferably contained, because the flavor can be more improved by applying the constitution of the present invention.

The citrus-flavored alcoholic beverage of the present embodiment may be a so-called fruit juice-free beverage that does not contain fruit juice of a citrus fruit, as long as a flavor of a citrus fruit is felt. The citrus-flavored alcoholic beverage of the present embodiment may be, for example, an alcoholic beverage containing an aroma essence that has reproduced an aroma characteristic of a citrus fruit, or an alcoholic beverage containing an extract of a citrus fruit that contains an aroma component characteristic of a citrus fruit. The alcoholic beverage containing an extract of a citrus fruit is specifically, for example, a soaked liquor obtained by soaking a citrus fruit in an alcohol.

Moreover, the citrus-flavored alcoholic beverage may be not only the aforementioned one but also an alcoholic beverage containing two or more components of fruit juices of the aforementioned citrus fruits, extracts of the citrus fruits, and aroma essences.

The fruit juice content is a relative concentration given when a Brix value of a squeezed juice (fruit juice not from concentrate) that is obtained by squeezing edible parts of a fruit or the like and has been subjected to no treatment such as concentration, or an acidity thereof in terms of citric acid (also referred to as acidity simply hereinafter) is 100%. The Brix value refers to a sugar refractometer reading at a sample temperature (liquid temperature) of 20°C on the basis of JAS. Measurement of the Brix value can be carried out using known method and apparatus. The acidity can be expressed in number of grams (anhydrous citric acid g/100 g) when the amount of an organic acid contained in 100 g is converted to citric acid. The acidity can also be measured by the method defined as an acidity measuring method of JAS, specifically, a neutralization titration method (quantitative method) using a 0.1 mol/L sodium hydroxide standard solution as an alkaline solution.

Whether the fruit juice content is calculated based on the Brix value or the acidity is determined by the type of fruit according to JAS. For example, the fruit juice content of grapefruit is calculated based on the Brix value, and that of lemon is calculated by the acidity. When the fruit juice content is converted based on the Brix value of JAS, calculation is carried out excluding Brix values of saccharides, honey, etc. having been added to the fruit juice.

In the citrus-flavored alcoholic beverage of the present embodiment, the fruit juice content of citrus juice is preferably 3% or less (fruit juice-free beverage falls into the concept, that is, it is preferable that citrus juice be contained at a fruit juice content of 3% or less or fruit juice should not be contained) because the flavor can be more improved by applying the constitution of the present invention.

From the viewpoint of further improvement in taste required for a citrus-flavored alcoholic beverage, the acidity of the citrus-flavored alcoholic beverage of the present embodiment, in terms of citric acid, is preferably 0.20 mg/100 ml or more.

As previously described, the acidity of an alcoholic beverage is the number of grams (anhydrous citric acid g/100 g) when the organic acid contained in 100 g of the alcoholic beverage is converted to citric acid, and can be measured using known method and apparatus. As a specific measuring method, the method defined as an acidity measuring method of JAS can be used, and more specifically, a neutralization titration method (quantitative method) using a 0.1 mol/L sodium hydroxide standard solution as an alkaline solution can be used. Accordingly, the value of acidity can also be appropriately adjusted by a person skilled in the art by, for example, changing the type or the content of an organic acid to be added to the beverage.

The citrus-flavored alcoholic beverage of the present embodiment may contain carbonic acid gas. When carbonic acid gas is contained, the gas pressure is not particularly limited and can be appropriately set by a person skilled in the art, but from the viewpoints of impartation of a clean aftertaste, pressure resistance of a container, etc., the gas pressure is preferably 1.5 to 3.5 gas volume. The gas volume refers to a volume ratio between a volume of carbonic acid gas dissolved in a beverage at 1 atom and 20°C and a volume of the beverage. The value of gas volume can be obtained as a value given when the pressure becomes constant after the sample is set to 20°C, then a gas internal pressure gauge is installed, a stopper cock is opened once to perform degassing (snifting) operation, the stopper cock is immediately closed, and vigorous shaking is performed.

The citrus-flavored alcoholic beverage of the present embodiment can be obtained by mixing an alcohol, a raw material water, thymol, cineole, and other components that are contained when needed (e.g., components relating to a citrus flavor, such as lemon juice and lemon aroma essence) with one another.

In the production of the citrus-flavored alcoholic beverage, the order of adding the components, or the like is not particularly limited and can be appropriately set by a person skilled in the art. The aforementioned raw material water may be not only water itself but also a solution of the components contained. The components to be added to the citrus-flavored alcoholic beverage may be each added independently, or may be added as a mixture having been prepared in advance.

When a beverage containing carbonic acid gas is prepared, a method using, as a raw material water, water containing carbonic acid gas (carbonated water) in the dilution step may be used, or prior to filling the container, carbonation may be carried out so that the gas pressure may become the prescribed gas volume.

The citrus-flavored alcoholic beverage of the present embodiment produced can be enclosed in a container to prepare, for example, a container-packed beverage. The method for enclosing the beverage in a container, or the like is not particularly limited and can be carried out in accordance with, for example, a conventional method. As the container also, a known one can be appropriately selected and used, and the material, the shape, etc. are not particularly limited. Specific examples of the containers include paper containers, transparent or translucent bottles, transparent or translucent plastic containers such as PET bottles, and metal cans such as steel cans and aluminum cans.

According to the present embodiment, by incorporating cineole in a citrus-flavored alcoholic beverage containing 1.0 ppb or more of thymol at a cineole content of 50 ppb or more and 10000 ppb or less, unpleasant pungent odor and taste derived from thymol and astringency are reduced, the aftertaste can be cleaned, and moreover, the flavor of the citrus-flavored alcoholic beverage can also be improved. As a result, this can contribute to the provision of more highly palatable beverages.

### Examples

The present invention will be more specifically described with reference to the following examples, but the present invention is not limited thereto.

[Preparation of citrus-flavored beverage base liquid]

A citrus-flavored beverage base liquid of the formulation shown in Table 1 (alcohol: 5.1 v/v%, acidity: 0.25, carbonic acid gas pressure: 2.3 gas volume) was prepared.

**[Table 1]**

| Base liquid | | |
|---|---|---|
| (Alcohol: 5.1 v/v%, acidity: 0.25, carbonic acid gas pressure: 2.3 gas volume) | | |
| Raw material | Blending quantity | Remarks |
| Brewer's alcohol | 53.0ml | Alcohol: 95 v/v% |
| 55% High-fructose corn syrup | 50.0g | |
| Citric acid (anhydrous) | 2.5g | |
| Trisodium citrate | 1.0g | |
| Citrus flavoring | 1.0g | |
| Addition of water | | |
| Total | 1000ml | |

| | | |
|---|---|---|
| * It has been confirmed that thymol and cineole were not contained in the citrus flavoring used in the base liquid. | | |

### [Reference Test]

Thymol was added to the citrus-flavored beverage base liquid so that its content becomes as shown in Table 2, thereby preparing beverage samples 1-2 to 1-7.

Regarding (a) pungent odor and taste (derived from thymol), (b) astringency, (c) clean aftertaste, and (d) flavor (taste), evaluation was carried out by three trained panelists using, as a control (evaluation point 0), a sample 1-1 without thymol added.

In the present specification, the clean aftertaste is a feeling of the aftertaste which quickly disappears after drinking, and refers to a feeling of the taste including sweetness, bitterness, sourness, umami, saltiness and the like, which disappears without remaining later after drinking. If the clean aftertaste is enhanced, the aftertaste disappears more quickly, and a sense of discomfort less remains in the mouth.

Regarding (a) to (c), evaluation was carried out on the basis of the following 7 grades in which the evaluation point in the case of the strongest feeling was +3.
+3 points: considerably stronger than the control; +2 points: stronger than the control; +1 point: slightly stronger than the control; 0 point: the same level as the control; -1 point: slightly weaker than the control: -2 points: weaker than the control; -3 points: considerably weaker than the control

Regarding (d), evaluation was carried out on the basis of the following 7 grades in which the evaluation point in the case of the highest grade (the best taste felt) was +3.
+3 points: considerably better than the control, +2 points better than the control; +1 point: slightly better than the control; 0 point: the same level as the control;
-1 point: slightly worse than the control; -2 points:
   worse than the control; -3 points: considerably worse than the control

The results are shown in Table 2.

**[Table 2]**

| | Sample 1-1 | Sample 1-2 | Sample 1-3 | Sample 1-4 | Sample 1-5 | Sample 1-6 |
|---|---|---|---|---|---|---|
| Base liquid (ml) | 1000 | 1000 | 1000 | 1000 | 1000 | 1000 |
| Thymol (mg) | 0 | 0.001 | 0.01 | 0.05 | 0.1 | 0.5 |
| Thymol concentration (ppb) | 0 | 1 | 10 | 50 | 100 | 500 |

| Sensory evaluation result | | | | | | |
|---|---|---|---|---|---|---|
| Pungent odor and taste (derived from thymol) (weak -3 ⇔ strong +3) | 0 | 1.0 | 1.3 | 2.3 | 2.7 | 3.0 |
| Astringency (weak -3 ⇔ strong +3) | 0 | 0.7 | 1.3 | 2.0 | 2.7 | 3.0 |
| Clean aftertaste (weak -3 ⇔ strong +3) | 0 | -0.7 | -1.7 | -2.0 | -2.7 | -3.0 |
| Flavor (taste) (bad -3 ⇔ good +3) | 0 | -1.0 | -1.7 | -2.3 | -2.7 | -3.0 |

As can be understood from Table 2, in the samples in which 1 ppb or more of thymol was added to the alcoholic beverage base liquid with citrus flavor imparted, a pungent chemical odor characteristic of thymol and astringency were felt, and a clean aftertaste decreased. Moreover, evaluation of a flavor (taste) also decreased.

### [Test Example 1]

The sample 1-4 (thymol concentration: 50 ppb) of Reference Test was used as a citrus-flavored alcoholic beverage of Comparative Example 1 (evaluation point 0).

Further, cineole was added to the sample 1-4 so that its content becomes as shown in Table 3, thereby preparing citrus-flavored alcoholic beverages of Examples 1 to 6 and Comparative Example 2.

Regarding Comparative Examples 1 and 2 and Examples 1 to 6, the same sensory evaluation tests as in Reference Test were carried out. The results are shown in Table 3.

**[Table 3]**

| | Comparative Example 1 | Example 1 | Example 2 | Example 3 | Example 4 | Example 5 | Example 6 | Comparative Example 2 |
|---|---|---|---|---|---|---|---|---|
| Base liquid (ml) | 1000 | 1000 | 1000 | 1000 | 1000 | 1000 | 1000 | 1000 |
| (A) Thymol concentration (ppb) | 50 | 50 | 50 | 50 | 50 | 50 | 50 | 50 |
| (B) Cineole concentration (ppb) | 0 | 50.0 | 100.0 | 500.0 | 1000.0 | 5000.0 | 10000.0 | 50000.0 |
| (B) / (A) | | 1.0 | 2.0 | 10.0 | 200 | 100.0 | 2000 | 1000.0 |

| Sensory evaluation result | | | | | | | | |
|---|---|---|---|---|---|---|---|---|
| Pungent odor and taste (derived from thymol (weak -3 ⇔ strong +3) | 0 | -1.3 | -2.0 | -2.0 | -3.0 | -3.0 | -3.0 | -3.0 |
| Astringency (weak -3 ⇔ strong +3) | 0 | -1.0 | -1.3 | -2.0 | -3.0 | -3.0 | -3.0 | -3.0 |
| Clean aftertaste (weak -3 ⇔ strong +3) | 0 | 1.0 | 1.7 | 2.3 | 3.0 | 3.0 | 3.0 | 3.0 |
| Flavor (taste) (bad -3 ⇔ good +3) | 0 | 1.3 | 2.3 | 3.0 | 3.0 | 2.7 | 1.3 | -0.3 |
| Comment | | | | | | | | Cool feeling is too strong, and the evaluation is lower than that of an additive-free product. |

As can be understood from Table 3, in Examples 1 to 6 in each of which cineole was added within the range from 50 ppb or more to 10000 ppb or less to the citrus-flavored alcoholic beverage base liquid containing 50 ppb of thymol, a pungent chemical odor characteristic of thymol and astringency decreased, and a clean aftertaste increased. Moreover, improvement in flavor (taste) was also observed.

## Claims

1. A citrus-flavored alcoholic beverage comprising
thymol at its content of 1.0 ppb or more, and
cineole at its content of 50 ppb or more and 10000 ppb or less.

2. The citrus-flavored alcoholic beverage according to claim 1, comprising citrus juice.

3. The citrus-flavored alcoholic beverage according to claim 1 or 2, wherein a fruit juice content of the citrus juice is 3% or less.

4. The citrus-flavored alcoholic beverage according to any one of claims 1 to 3, comprising fruit juice of a flavorful acid citrus fruit.

5. The citrus-flavored alcoholic beverage according to any one of claims 1 to 4, comprising lemon juice.

6. The citrus-flavored alcoholic beverage according to any one of claims 1 to 5, wherein a ratio of a cineole content (B) to a thymol content (A), (B)/(A), is 1.0 or more and 200 or less.

7. The citrus-flavored alcoholic beverage according to any one of claims 1 to 6, having an alcohol content of 1 v/v% or more and 9 v/v% or less.

8. The citrus-flavored alcoholic beverage according to any one of claims 1 to 7, being a container-packed beverage.

9. The citrus-flavored alcoholic beverage according to any one of claims 1 to 8, having an acidity, in terms of citric acid, of 0.20 mg/100 ml or more.

10. The citrus-flavored alcoholic beverage according to any one of claims 1 to 9, comprising carbonic acid gas and having a carbonic acid gas pressure of 1.5 to 3.5 gas volume.

11. A method for producing a citrus-flavored alcoholic beverage, comprising
incorporating thymol at its content of 1.0 ppb or more, and
incorporating cineole at its content of 50 ppb or more and 10000 ppb or less.

12. A method for improving a flavor of a citrus-flavored alcoholic beverage containing 1.0 ppb or more of thymol, comprising
incorporating cineole in the citrus-flavored alcoholic beverage at a cineole content of 50 ppb or more and 10000 ppb or less.
